# EUROPEAN PATENT APPLICATION

(11) **EP 2 407 121 A1**
(43) Date of publication of application: **18.01.2012**
(21) Application number: 10007281.8
(22) Date of filing: 14.07.2010
(51) Int. Cl.: A61C 8/00

(54) **Abutment system**

(71) Applicant: Nobel Biocare Services AG, 8058 Zürich-Flughafen (CH)
(72) Inventor: Petersson, Henrik, 41658 Gothenburg (SE); Jörneus, Lars, 43961 Frillesås (SE)
(74) Representative: Davies, Dominic Jack

(57) **Abstract**

The invention relates to a dental abutment or implant assembly comprising: a body having a longitudinal axis, a distal end and an open proximal end; implant retaining means provided on an external portion of said body;
an internal bore provided within a portion of said body, said internal bore having a proximal end at the open proximal end of said body and a distal end;
a first portion of said internal bore comprising an internally facing sloping surface having a proximal end and a distal end, said sloping surface extending from near the proximal end of said internal bore toward the distal end of said internal bore, said surface being formed with a sloping path inwardly toward its distal end at an angle of about 8 [deg.] to about 40 [deg.] relative to said longitudinal axis when the implant is seen from the side;
a second portion of said internal bore comprising an internally facing drive region positioned between the distal end of said surface and the distal end of said internal bore; and
a third portion of said internal bore comprising an internally threaded region positioned within said drive region and the distal end of said internal bore.

## Description

### Field of the Invention

The present invention relates generally to the field of dental implants and more specifically to an internal connection implant. The invention also relates to the combination of an internal connection implant and a complementary abutment.

### Background of the invention

A wide variety of dental implants currently exist in the art. Such dental implants commonly include a body with external threads for mounting and retaining the implant within the patient's mouth. Installation of the implant involves rotation of the implant into a predrilled or tapped site using a drive member such as a ratchet or other rotation means. The implant also includes a drive region, which may be located externally or internally. Various structures for both externally and internally driving the implant currently exist.

While many internally driven dental implants provide satisfactory torque transfer and stability between implant and abutment, implant connection failures continue to exist. Accordingly, there is a continuing need for an internal connection or internally driven implant, which provides improved torque transfer and implant/abutment stability, with a structure that can also minimize implant connection failure. There exist a number of interfaces in the art, of which US 6,733,291 (Nobel Biocare) or EP 1763 324 (Keystone Dental Inc) discloses close examples.

One aspect with fixation of abutments to implant systems is that in some situations the abutment is not easy to align with the implant interface. If not properly aligned the risk for abutment or even implant failure is increased when the abutment is fixed to the implant with a screw, since the loads will not be properly distributed. The access to some parts of a patient's mouth as well as the visibility in the oral region makes it desirable to present a solution that facilitate proper alignment and subsequent fixation of abutment to an implant. There is a need in the art for a solution to the problem and especially for implant systems with a small radius. For implants having a small radius, the need for a solution is perhaps even greater since the available material for providing a connecting region is more limited.

### Summary of the invention

The present invention relates to a dental implant and combination dental implant and abutment assembly and more specifically to an internal connection dental implant and combined internal connection implant and abutment assembly.

Another object of the present invention is to provide an internal connection dental implant and assembly, which provides stability between the implant and the corresponding abutment. These and other objects of the present invention will become apparent with reference to the drawings, the description of the preferred embodiment and the appended claims.

A dental implant comprising:
a body having a longitudinal axis, a distal end and an open proximal end;
implant retaining means provided on an external portion of said body;
an internal bore provided within a portion of said body, said internal bore having a proximal end at the open proximal end of said body and a distal end;
a first portion of said internal bore comprising an internally facing sloping surface having a proximal end and a distal end, said sloping surface extending from near the proximal end of said internal bore toward the distal end of said internal bore, said surface being formed with a sloping path inwardly toward its distal end at an angle of about 8 [deg.] to about 40 [deg.] relative to said longitudinal axis when the implant is seen from the side;
a second portion of said internal bore comprising an internally facing drive region positioned between the distal end of said surface and the distal end of said internal bore; and a third portion of said internal bore comprising an internally threaded region positioned within said drive region and the distal end of said internal bore.

The dental implant of claim 1 wherein said surface is a substantially frustoconical surface sloping toward its distal end at an angle of about 8 [deg.] to about 30 [deg.].

The dental implant of claim 2 wherein said surface is sloping toward its distal end at an angle of about 8 [deg.] to about 20 [deg.] and preferably around 12 [deg.]. The dental implant according to any one of claims 1-3. wherein said internal wrench engaging portion includes a plurality of concave lobes alternating with said concave lobes, the radially outermost points of each of said concave lobes lying on a circle defining a major diameter

The dental implant according to any one of the previous claims, wherein a portion of each of said convex lobes has a circular configuration as seen in a cross sectional plane of the drive region, said cross sectional plane being aligned with a normal vector of said longitudinal axis. The combination of a dental implant of claim 1 and an abutment connectable to said implant wherein said abutment has a proximal end and a distal end and comprises:
a first abutment surface engaging said surface when said dental implant and said abutment are connected;
a second abutment surface corresponding to and adjacent to said drive region when said dental implant and said abutment are connected;
a prosthesis mounting portion;
a central bore extending through at least a portion of said prosthesis mounting portion and to the distal end of said abutment; and
an abutment screw extending through said central bore and into said internally threaded bore when said dental implant and said abutment are connected.

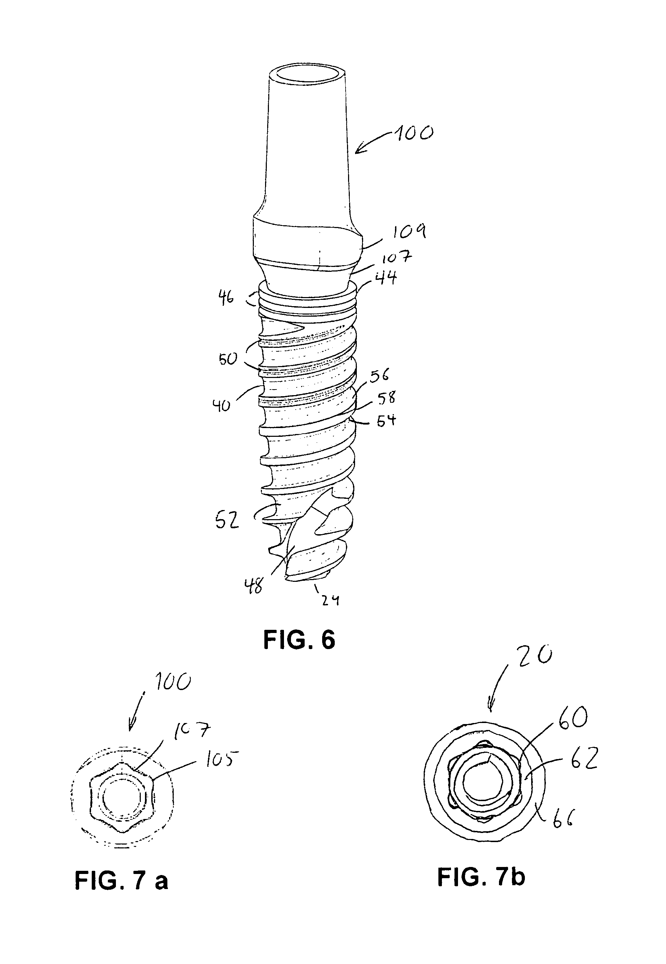

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. In addition, while the number of variations of the invention have been shown and described in detail, other modifications, which are within the scope of this invention, will be readily apparent to those of skill in the art based upon this disclosure. It is also contemplated that various combinations or subcombinations of the specific features and aspects of the embodiments may be made and still fall within the scope of the invention. Accordingly, it should be understood that various features and aspects of the disclosed embodiments can be combined with, or substituted for, one another in order to perform varying modes of the disclosed invention. Thus, it is intended that the scope of the present invention herein disclosed should not be limited by the particular disclosed embodiments described above, but should be determined only by a fair reading of the claims. The drive and indexing region of the implant is comprised of a lobe configuration having a plurality of internally facing lobes, which includes a plurality of outwardly extending, or concave lobes and a similar number of inwardly extending convex lobes. In the preferred embodiment, the concave lobes are angularly spaced from one another by 60[deg.] as shown in fig 7b. Thus, in the preferred embodiment, there are six concave lobes 38.. Preferably, the wall thicness is kept as small as possible, while still providing sufficient torque transfer to rotate and thus install the implant into the jawbone of a patient and to also withdraw the implant, if needed. This in turn maximizes the strength of the implant and reduces implant connection failures, both during installation and during use. The drive and indexing region extends from the point to its distal end. The point defines the transition from the region to the region and thus the distal or ending point of the surface and the beginning or proximal end of the lobe configuration. Preferably, each of the lobes extends from its proximal end to its distal end along substantially parallel lines. Thus, the surfaces of the lobes and defined by the inner surface of the wall extend substantially parallel to the longitudinal axis 36 of the implant.

Accordingly, in the preferred embodiment of the implant, the drive and indexing region comprises a plurality of outwardly extending concave lobes. These lobes 38 are portions of circles having substantially the same or similar radii and have side walls defined by the surface, which are substantially parallel to each other and to the longitudinal axis of the implant. This structure provides an outer wall of increased diameter to resist, and thus reduce, implant connection failure during installation or use, regardless of the implant size and particularly when in situations involving off-axis loading.

Although the preferred lobe configuration comprises a plurality of concave lobes are formed of portions of substantially equal radii, certain advantages of the present invention can also be achieved by lobed configurations which are formed of circles with unequal radii or formed of configurations other than circles. In alternate configurations, the corresponding configurations of the loads on the abutment and the drive tools and placement heads are similarly altered.

### Brief description of the drawing

FIG. 1 is a schematic side view showing the dental implant assembly in accordance with the present invention,
FIG 2a is a perspective view of an abutment of the dental implant assembly of FIG 1.
FIG 2b is an enlarged partial side view of an abutment of the dental implant assembly of FIG 1,
FIG. 3 is a cross sectional side view of the dental implant/abutment in accordance with the present invention when in an assembled state.
FIG. 4a is a side view of the dental implant/abutment in accordance with the present invention when in a non-assembled state,
FIG. 4b is a side view of the dental implant and a driver in accordance with the present invention.

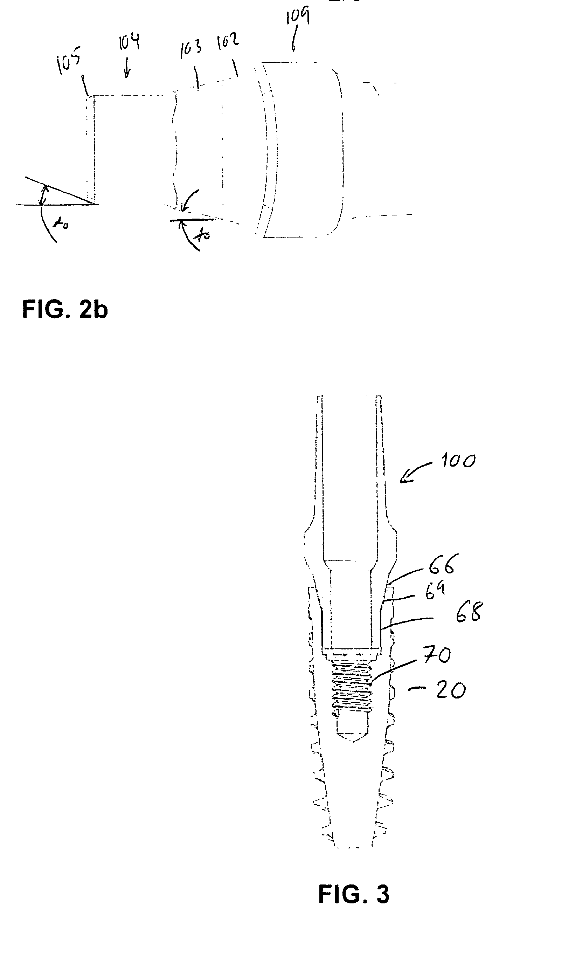

FIG. 3 is a cross sectional side view of the dental implant/abutment in accordance with the present invention when in a fixed state,
FIG. 6 is an enlarged, fragmentary view, partially in perspective view, of an assembled abutment and implant,
FIG. 7a is a plan view of an abutment as seen from the side mating with the implant and
FIG. 7b is a plan view of an implant in cross section taken in a lobed abutment chamber as seen from the side mating with the abutment.

### Detailed description of preferred embodiments

The present invention is directed to a dental implant and a dental implant assembly and more specifically to an internal drive or internal connection implant and a corresponding dental implant assembly.

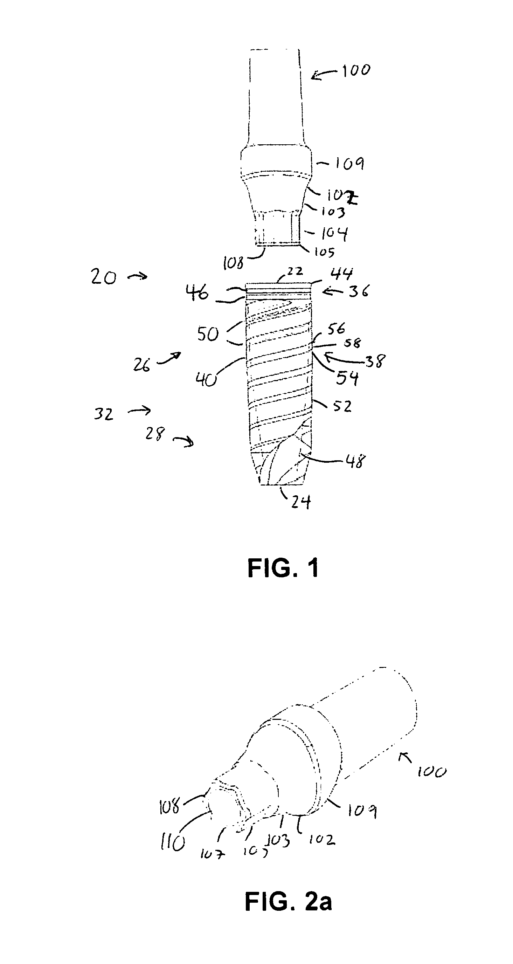

Fig. 1 illustrates an embodiment of a dental implant 20. In this embodiment, the implant 20 comprises an implant body 32, which includes a lower portion 34 and a collar 36. The implant 20 may be made of titanium, although other materials may be used, such as various types of ceramics. The lower portion 34 can be tapered and can include a pair of threads 38 that are located on an outer surface 35 of the lower portion 34. As will be explained below, although the illustrated embodiment includes a pair of threads 38 that each extends helically around the implant, modified embodiments may include more or less threads. In addition, as explained below, the body 32 is illustrated as being generally conical or tapered. However, in other embodiments, the body 32 can be substantially cylindrical or otherwise shaped. The dental implant 20 can comprise a proximal end 22, a proximal portion 26 generally adjacent the proximal end 22, a distal end 24 and a distal portion 28 generally adjacent the distal end.

In the illustrated embodiment, the implant body 32 includes an outer surface or a bone apposition surface 40, which can be configured to promote osseointegration. In one embodiment, the bone apposition surface 40 is configured to promote osseointegration by increasing the surface area of the body 32. In this regard, the bone apposition surface 40 can be formed by roughening the implant body 32 in several different manners, such as, for example, by acid-etching, grit blasting, and/or machining. Alternatively, the bone apposition surface 40 can be formed by coating the lower surface with a substance in order to promote osseointegration. In some embodiments, this may result in decreasing or increasing the surface area of the implant body 32. Calcium phosphate ceramics, such as tricalcium phosphate (TCP) and hydroxyapatite (HA) are examples of materials that can enhance osseointegration by changing the chemistry of the outer surface 40. In other embodiments, the outer surface 40 can comprise macroscopic structures, such as, for example, threads, micro-threads, indentations, and/or grooves that are configured to promote osseointegration and can be used alone or combined with the roughening and/or the coatings described above. In one embodiment, the outer surface 28 comprises a microstructure surface, such as, a highly crystalline and phosphate enriched titanium oxide micro structured surface with open pores in the low micrometer range. An example of such a surface is sold under the trademark, TiUnite™ by Nobel Biocare AB™. In another embodiment, it is particularly advantageous for a zirconium ceramic body can be coated with porous zirconium to provide a microstructure surface, In another embodiment, the microstructure surface can be coated with a substance configured to promote osseointegration (such as bone growth stimulating substance).

With continued reference to Figure 1, the collar 36 can lie above the lower portion 34 and, in the illustrated embodiment, can be integrally formed with or permanently affixed to the lower portion 34. The collar 36 can be defined at least in part by a sidewall 44. In the illustrated embodiment, the sidewall 44 includes two semicircular grooves 46 that are positioned circumferentially around the sidewall 44 of the collar 36. The semicircular grooves 46 can provide additional growth surface for soft tissue, such as that of a patient's gums. In one embodiment, the semi-circular grooves 46 have a width of about 150 microns and a depth of about 50 microns. The grooves 46 can be sized so that one or more grooves 46 occupy a substantial portion of the collar 36. In the illustrated embodiment of Figure 1, two grooves 46 are shown as occupying a substantial portion of the collar 36 (e.g., greater than 50% of a total area). In modified embodiments, the collar 36 can be provided with more, less or no grooves and/or grooves with different dimensions and configurations In other embodiments, the circumferential protrusions or micro-threads can be provided on the collar 36. In general, such structures on the collar 36 are advantageously configured to load the harder cortical bone through which the implant 20 is inserted but to a lesser extent as compared to the threads 38 of the implant 20, which can be configured to engage the spongy cancellous bone positioned below the cortical bone. In other embodiments, the collar 36 can be non-cylindrical with, for example, inwardly tapered or have a reverse taper sidewall.

In the embodiment shown in Fig. 1, each of the threads 38 comprises a distal flank 54 and a proximal flank 56 that are connected by a face 58. As mentioned above the illustrated dental implant 20 includes a pair of threads 38 that begin at opposing sides of the distal end 24 and progress towards the proximal end 22 along the lower portion 34 while maintaining opposing positions along the lower portion 34 of the implant body 32. Accordingly, in the illustrated embodiment each of the threads 38 have the same pitch. It will be appreciated that, although the illustrated embodiment shows two threads 38, other suitable numbers of threads may also be used, such as one or three.

In the illustrated embodiment, the face 58 of each of the threads 38 increases in thickness T as the threads 38 progress from the distal end 24 to the proximal end 22 of the dental implant 20. That is, a distal portion of threads 38 in the distal portion 26 of the implant 20 comprises a thinner face than a proximal portion of the threads 38 on the proximal portion 28 of the implant 20.

The implant body 32 can define at least three different angles: a first angle can be defined by the general shape of the implant body 32; a second angle can be defined by the faces 58 of the threads 38; and a third angle can be defined by the base of the thread. With reference to Fig. 1, the conical shape of the lower portion 34 of the implant body 32 can comprise a variable angle. The variable angle can vary such that the angle at the distal portion 28 is shallower than that at the proximal portion 26. Further, the faces 58 of the threads 38 can also be conical and the faces 58 of the threads 38 can define a varying conical angle. The angle defined by the faces 58 of the threads 38 can be different from the varying conical angle formed by the lower portion 34 of the implant body 32. That is, the conical angle defined by the lower portion 34 of the implant body 32 can be shallower than the conical angle formed by faces 58 of the threads 38. In one embodiment, the conical angle defined by the lower portion 34 of the implant body 32 can be greater than the conical angle formed by faces 58 of the threads 38. Although the illustrated embodiment utilizes the aforementioned conical angle relations, other suitable relations may be used Such suitable relations may comprise threads 38 in which the faces 58 are not conical and define a generally cylindrical shape and/or where the faces 58 of the threads 38 that define a conical angle that closely matches the conical angle of the lower portion 34 of the implant body 32. In still other embodiments, the angel defined by the faces 58 of the threads 38 and/or the angle defined by the body 32 can be generally parallel to the longitudinal axis of the implant 20 such that they are substantially cylindrical.

With reference to Fig. 1 the lower portion 34 of the dental implant 20 comprises two flutes 48 that are positioned on the distal portion 28 of the dental implant 20. The flutes 48 are configured to aid in inserting the dental implant 20 and will be discussed in greater detail below. The lower portion 34 also comprises upper grooves 50 that in the proximal portion 26 of the dental implant 20 are located on the faces 58 of each of the pair of threads. In the distal portion 28 of the implant, lower grooves (not shown) may be located between each of the threads 38 on the surface 35 on the distal portion 28 of the dental implant 20. In general, the grooves 50 extend in a generally helical pattern. In the illustrated embodiment, each groove 50 is substantially continuous. However, in modified embodiments, one or both grooves 50 can be formed to be non-continuous. For example, the grooves 50 can be formed from a series of shorter grooves, dimples, or indentations that together form a generally helical pattern. However, continuous grooves can advantageously promote bone attachment as it has been observed that bone tissue likes to grow along continuous channels of certain dimensions.

With reference to Fig. 1 the flutes 48 can comprise a generally helical shape. Further, the flutes 48 can extend from the distal end 24 toward a generally central portion of the dental implant 20. The flutes 48 can be located at generally opposing positions along the lower portion 34 of the implant body 32. In the illustrated embodiment, the flutes 48 are configured to cut, or remove bone, when the dental implant 20 is rotated in a counterclockwise direction. Furthermore, the flutes 48 are configured to allow the dental implant 20 to be rotated clockwise without cutting or removing bone. However, bone removal may be accomplished by rotating the implant counterclockwise.

Although the illustrated embodiment of the dental implant 20 has been shown with flutes 48 that are configured to cut when the dental implant 20 is rotated in a counterclockwise direction, other suitable flutes or flute orientations may also be used. Such suitable flutes or flute orientations may comprise flutes that are configured to cut or provide a tapping function when the dental implant 20 is rotated in a clockwise direction

With continued reference to Fig. 1 the grooves 50 are located on the dental implant 20 to, e.g. provide additional surfaces for osseointegration. The grooves 50 can be located on the faces 58 of the portions of the threads 38 located on the proximal portion 26 of the dental implant 20. The grooves 50 can begin at the proximal end 22 of the lower portion 34 and extend toward the distal end 24 along the faces 58 of the threads 38 approximately over at least about 37% of the length of the lower portion 34. In the illustrated embodiment, the grooves 50 dissipate and/or taper toward the distal end 24 of the implant 20. The dissipation and/or tapering of the grooves 50 can occur over a distance approximately within a 1/4-1/2 rotation of the implant 20. In some embodiments, the portion of the faces 58 beyond the dissipation and/or taper will not include the grooves 50. The illustrated embodiment of Figure 1 illustrates that the grooves 50 can extend approximately along the proximal 37% of the length of the lower portion 34; however, in other embodiments, the upper grooves 50 can be formed to extend approximately along the proximal 10% to the proximal 80% of the lower portion 34, and in other embodiments the upper grooves 50 may extend approximately along the proximal 20% to the proximal 50% of the lower portion 34.

In one embodiment, the configuration of the lower grooves and the upper grooves 50 can result in the upper and lower grooves 50 overlapping along at least a portion of the lower portion 34 of the implant body 32. Thus, there is a portion of the lower portion 34 of the implant body 32 that comprises both the upper and lower grooves 50. Although the illustrated embodiment shows that the upper grooves 50 and not the lower grooves, in other embodiments the upper grooves 50 and the lower grooves may or may not overlap and/or may terminate at a meeting point between the upper and lower grooves 50 or prior to a meeting point between the upper and lower grooves 50.

As best seen in Fig. 3, the dental implant 20 can also comprise a cavity or internal connection interface 66 that is open at the proximal end 22 of the dental implant 20. In the illustrated embodiment, the cavity 66 comprises an abutment chamber 68, a plurality of interlocking lobes 74 extending in the longitudinal direction provided evenly distributed around the interior of the inner proximal portion of the implant 20 The cavity comprises a threaded chamber 70. The abutment chamber 68 and interlock recess 74 can be configured to receive an abutment portion and the threaded chamber 70 can be configured to receive a coupling screw.

The threaded chamber 70 can be located generally below the abutment chamber 68. As was mentioned above, the threaded chamber 70 can be configured to receive a coupling screw (not shown) that is configured to attach an abutment to the implant 20.

In particular, as noted above, the abutment chamber 68 comprises a side wall that tapers inwardly with respect to the longitudinal axis L of the implant 20 providing a wider initial opening for the connection interface 66. The particular geometry of the abutment chamber 68 defines a conical half angle X° with respect to the longitudinal axis L. In one embodiment, the conical half angle is between about 10 degrees and about 20 degrees. That is, the angle between the inner wall 80 and a longitudinal center line L preferably is between about 10 degrees and about 20 degrees. In one embodiment, the conical half angle is about 12 degrees.

Yet another advantage of the illustrated embodiment is an area or thickness of the substantially planar top surface 21 of the implant 20. In one embodiment, the top surface 21 of the implant 20 advantageously can provide a surface to support certain dental restorations on the top surface 21 of the implant 20. Additionally or alternatively, the top surface 21 can be used to support a component that bypasses the interlock recess 74. Accordingly, in one embodiment, the top surface 21 of the implant 20 has at least a thickness as measured between the outer and inner periphery of the top surface 21 that is greater than at least 0.2 mm and in another embodiment greater than about 0.25 mm. In one embodiment, the thickness of the top surface 21 is about 0.25 mm.

The embodiments described above provide for improved stability of a dental implant when implanted in the alveolar bone. Furthermore, certain embodiments of the invention provide efficient utilization of space. For example, as described above, in certain embodiments, the upper groove 50 is located on the face 58 of the thread 38 at a portion of the body 32 containing the internal connection interface 66. Hence, the strength of the body of the implant 20 at this location remains unaffected. If the upper groove 50 had been located on the body 32 at this portion, less space would have been available for the internal connection interface 66 with maintained minimum wall thickness at specific dimensions to maintain body strength Hence, having the upper groove 50 positioned at the face 58 in the portion of the internal connection interface 66 improves the space available for the connection interface 66 and still provides for improved stability of the implant 20 In some embodiments, the wall thickness will be sufficient if the upper groove 50 is located at the face 58 only at the portion of the interlock recess 74 but at least partly not at the location of he threaded chamber 70.

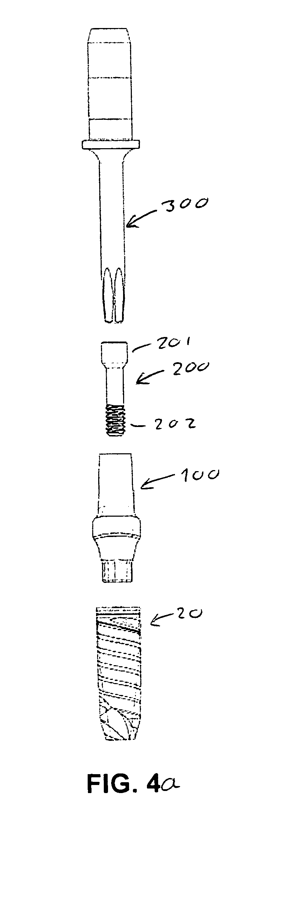

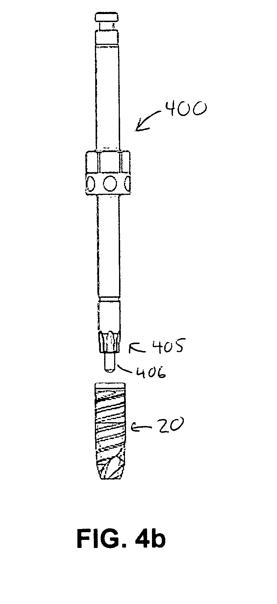

Figure 4a is a side cross sectional view illustrating the abutment 100 to be coupled to the dental implant 20 with a coupling screw 200. As illustrated, the interlock portion 106 of the abutment 100 is aligned and inserted into the interlock recess 74 of the dental implant 20. Furthermore, the conical portion 104 of the abutment 100 is inserted into the receiving chamber 68 of the dental implant 20. The abutment 100 can be inserted into the cavity 66 of the dental implant 20 such that the lower end 108 of the interlock portion 106 is in contact with the lower end 75 of the interlock recess 74. As shown in Figure 4, a top surface 21 of the implant 20 can remain exposed when the abutment 100 is coupled to the implant 20. In one embodiment, the exposed top surface has thickness N of at least about 0.2 millimeters and in one embodiment a thickness of about 0.25 millimeters. The thickness is at least 0.1 millimeters.

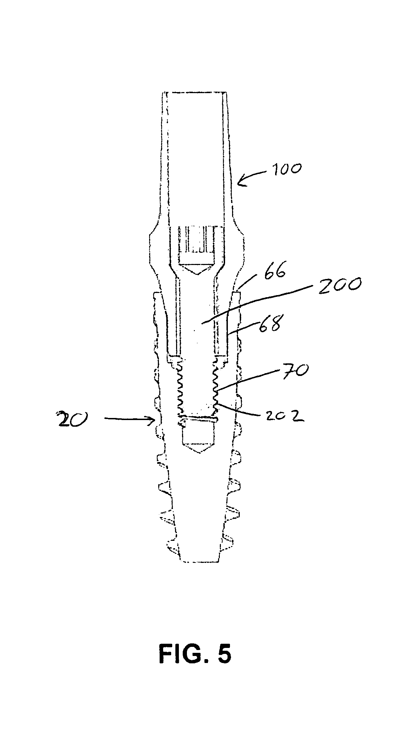

With reference to Figure 5, the lower threaded region 202 of the coupling screw 200 can be engaged with the threaded chamber 70 of the dental implant 20 and the seat 210 of the coupling screw 200 is abutting the seat 116 of the abutment 100. This engagement of the coupling screw 200 and the abutment 100 and the dental implant 20 can thereby secure the abutment 100 to the dental implant 20.

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. In addition, while the number of variations of the invention have been shown and described in detail, other modifications, which are within the scope of this invention, will be readily apparent to those of skill in the art based upon this disclosure. It is also contemplated that various combinations or subcombinations of the specific features and aspects of the embodiments may be made and still fall within the scope of the invention. Accordingly, it should be understood that various features and aspects of the disclosed embodiments can be combined with, or substituted for, one another in order to perform varying modes of the disclosed invention. Thus, it is intended that the scope of the present invention herein disclosed should not be limited by the particular disclosed embodiments described above, but should be determined only by a fair reading of the claims. The drive and indexing region of the implant is comprised of a lobe configuration having a plurality of internally facing lobes, which includes a plurality of outwardly extending, or concave lobes and a similar number of inwardly extending convex lobes. In the preferred embodiment, the concave lobes are angularly spaced from one another by 60[deg.] as shown in fig 7b. Thus, in the preferred embodiment, there are six concave lobes 38.. Preferably, the wall thicness is kept as small as possible, while still providing sufficient torque transfer to rotate and thus install the implant into the jawbone of a patient and to also withdraw the implant, if needed. This in turn maximizes the strength of the implant and reduces implant connection failures, both during installation and during use. The drive and indexing region extends from the point to its distal end. The point defines the transition from the region to the region and thus the distal or ending point of the surface and the beginning or proximal end of the lobe configuration. Preferably, each of the lobes extends from its proximal end to its distal end along substantially parallel lines. Thus, the surfaces of the lobes and defined by the inner surface of the wall extend substantially parallel to the longitudinal axis 36 of the implant.

Accordingly, in the preferred embodiment of the implant, the drive and indexing region comprises a plurality of outwardly extending concave lobes. These lobes 38 are portions of circles having substantially the same or similar radii and have side walls defined by the surface, which are substantially parallel to each other and to the longitudinal axis of the implant. This structure provides an outer wall of increased diameter to resist, and thus reduce, implant connection failure during installation or use, regardless of the implant size and particularly when in situations involving off-axis loading.

Although the preferred lobe configuration comprises a plurality of concave lobes are formed of portions of substantially equal radii, certain advantages of the present invention can also be achieved by lobed configurations which are formed of circles with unequal radii or formed of configurations other than circles. In alternate configurations, the corresponding configurations of the loads on the abutment and the drive tools and placement heads are similarly altered.

Reference is next made to FIGS. 2a, and 2b showing one form of an abutment 200 usable with the implant 11. The abutment 12 includes a region 45 corresponding to the implant region 31. This region 45 includes a lobed configuration comprised of a plurality of externally facing lobes including a plurality of outwardly extending convex lobes 46 which compliment, and are designed for engagement with, the concave lobes 38, and a plurality of concave lobes 48 which compliment, and are designed for engagement with, the convex lobes 39. Thus, when assembled as shown in FIGS. 1 and 2, the lobed configuration 45 of the abutment is designed for insertion into and seating within the lobed configuration of the region 31.

FIG. 4b show one embodiment of drive means for installing the implant 20. With reference to FIGS. 13 and 14, the direct drive includes a guide portion 66, a drive portion 65, a surface portion 68 and a rotation region 69. The guide portion 66 comprises a generally cylindrical, unthreaded structure extending generally parallel to the longitudinal axis of the drive member 63. The region 65 comprises a lobed configuration substantially matching the lobed configuration 45 of the abutment) so that when the drive member 63 is inserted into the implant 11 and rotated, the lobed configuration 65 mates with and engages the lobed configuration 31 in driving relationship. The rotation portion 69 may comprise a hex, a square or any other means to which a motorized or non-motorized instrument or the like can be applied to rotate the drive member 63 and thus the implant 11.

Having described the structure of the dental implant and dental implant assembly of the present invention, its installation can be best understood as follows. First, after preparing the implant site within the patient's mouth, the implant is installed by rotating the same, either with a direct drive member 400 such as is shown in FIG. 4b or with a preassembled fixture mount (not shown). After the implant is installed to the desired installation depth, the drive member 400 or the fixture mount assembly is removed from the implant. The abutment is then positioned within the open end of the implant, with the lobed configuration 104 and sloping surface 105 of the abutment being positioned within and engaging the lobed configuration 60 and sloping surface 62 of the implant. The abutment screw 200 is then inserted into the open end of the bore 110 and rotated by a ratchet, as indicated in fig 4a, or other rotation tool known in the art. Rotation of the screw 200 forces the sloping surface 103 against the sloping surface 69 of the implant abutment chamber 68 forming a tight friction fit. This provides stability between the abutment and the implant. When assembled with an implant 20, as shown in FIG 5 the lobed portion is inserted into the open end of the implant to mate with the corresponding lobed portion of the implant. The screw is then inserted through the open end of the bore and the distal end is threaded into the internal threads of the implant. The screw is tightened until the lower surface of the mount tightly engages the proximal end of the mount, thereby firmly securing the fixture mount assembly within the implant

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. In addition, while the number of variations of the invention have been shown and described in detail, other modifications, which are within the scope of this invention, will be readily apparent to those of skill in the art based upon this disclosure. It is also contemplated that various combinations or sub combinations of the specific features and aspects of the embodiments may be made and still fall within the scope of the invention. Accordingly, it should be understood that various features and aspects of the disclosed embodiments can be combined with, or substituted for, one another in order to perform varying modes of the disclosed invention. Thus, it is intended that the scope of the present invention herein disclosed should not be limited by the particular disclosed embodiments described above, but should be determined only by a fair reading of the claims.

## Claims

1. An abutment (100) connectable to an implant wherein said abutment has a proximal end and a distal end and comprises:
a first abutment surface engaging said surface when said dental implant and said abutment are connected;
a second lobed abutment surface corresponding to and adjacent to said drive region when said dental implant and said abutment are connected;
a prosthesis mounting portion;
a central bore extending through at least a portion of said prosthesis mounting portion and to the distal end of said abutment; and
a third sloping abutment surface (105) which is sloping inwardly, towards its distal end portion, in relation to a longitudinal axis as seen from the side, wherein said second lobed abutment surface is immediate to said third sloping abutment surface.

2. The abutment (100) of claim 1, wherein the sloping angle Y if the third sloping surface is between 12.5 and 50 [deg].

3. The abutment (100) according to any one of claims 1-2, wherein a/the sloping angle Y of the third sloping surface is greater than the sloping angle X of a corresponding implant.

4. The abutment (100) according to any one of claims 1-3, wherein the inner bore is **characterised by** a contour line (as seen in cross section relative the longitudinal axis of the abutment) describing a radia-transition, between each lobe, with a radius corresponding to the lobes but which fades out after about 30 degrees to meet the opposing near lying inner bore surface contour nearest way.

5. A dental implant comprising:
a body having a longitudinal axis, a distal end and an open proximal end;
implant retaining means provided on an external portion of said body;
an internal bore provided within a portion of said body, said internal bore having a proximal end at the open proximal end of said body and a distal end;
a first portion of said internal bore comprising an internally facing sloping surface having a proximal end and a distal end, said sloping surface extending from near the proximal end of said internal bore toward the distal end of said internal bore, said surface being formed with a sloping path inwardly toward its distal end at an angle of about 8 [deg.] to about 40 [deg.] relative to said longitudinal axis when the implant is seen from the side;
a second portion of said internal bore comprising an internally facing drive region positioned between the distal end of said surface and the distal end of said internal bore; and
a third portion of said internal bore comprising an internally threaded region positioned within said drive region and the distal end of said internal bore.

6. The dental implant of claim 5 wherein said surface is a substantially frustoconical surface sloping toward its distal end at an angle of about 8 [deg.] to about 30 [deg.].

7. The dental implant of claim 6 wherein said surface is sloping toward its distal end at an angle of about 8 [deg.] to about 20 [deg.] and preferably around 12 [deg.].

8. The dental implant according to any one of claims 5-7, wherein said internal wrench engaging portion includes a plurality of concave lobes alternating with said concave lobes, the radially outermost points of each of said concave lobes lying on a circle defining a major diameter.

9. The dental implant according to any one of claims 5-8, wherein a portion of each of said convex lobes has a circular configuration as seen in a cross sectional plane of the drive region, said cross sectional plane being aligned with a normal vector of said longitudinal axis

10. The combination of a dental implant and an abutment (100) connectable to said implant wherein said abutment has a proximal end and a distal end and comprises:
a first abutment surface engaging said surface when said dental implant and said abutment are connected;
a second lobed abutment surface corresponding to and adjacent to said drive region when said dental implant and said abutment are connected;
a prosthesis mounting portion;
a central bore extending through at least a portion of said prosthesis mounting portion and to the distal end of said abutment; and
a third sloping abutment surface (105) which is sloping inwardly, towards its distal end portion, in relation to a longitudinal axis as seen from the side, wherein said second lobed abutment surface is immediate to said third sloping abutment surface.

11. The implant (20) according to any one of claims 5-10, wherein the inner bore is **characterised by** a contour line as seen in cross section relative the longitudinal axis of the abutment) describing an inner radius which is greater than the maximum radius of the lobed configuration abutment surface.
